# EUROPÄISCHE PATENTSCHRIFT

(11) **EP 2 823 227 B1**
(45) Veröffentlichungstag und Bekanntmachung des Hinweises auf die Patenterteilung: **09.08.2017**
(21) Anmeldenummer: 13706550.4
(22) Anmeldetag: 28.02.2013
(51) Int. Cl.: F22B 1/18, F02C 3/34, F22B 35/00, F01D 25/30, F02C 1/08, F02C 7/08, F02C 1/06

(54) **GASTURBINENANLAGE MIT ABGASREZIRKULATION**
GAS TURBINE PLANT HAVING EXHAUST GAS RECIRCULATION
INSTALLATION DE TURBINE À GAZ AVEC RECIRCULATION DES GAZ D'ÉCHAPPEMENT

(30) Priorität: 29.02.2012 CH 274122012
(43) Veröffentlichungstag der Anmeldung: 14.01.2015
(73) Patentinhaber: Ansaldo Energia IP UK Limited, London W1G 9DQ (GB)
(72) Erfinder: BENZ, Eribert, CH-5413 Birmenstorf (CH); GRAF, Frank, CH-5415 Nussbaumen (CH)
(74) Vertreter: Bernotti, Andrea
(86) Internationale Anmeldenummer: PCT/EP2013/054036
(87) Internationale Veröffentlichungsnummer: WO 2013/127924

(56) Entgegenhaltungen:
- EP-A1- 0 233 998
- WO-A1-96/12091
- DE-A1- 19 744 917
- GB-A- 1 004 139
- GB-A- 1 470 867
- US-A- 3 703 807
- US-A- 4 267 692
- US-A- 5 267 434
- US-A1- 2003 192 737
- US-A1- 2009 205 334

## Beschreibung

### Technisches Gebiet

Die vorliegende Offenbarung betrifft eine Gasturbinenanlage mit Abwärmekessel und Abgasrückführung.

### Stand der Technik

Aus der US 2009/0284013 A1 ist eine Gasturbinenanlage bekannt, die eine Gasturbineneinrichtung, einen Abwärmekessel und eine Abgasrückführung umfasst. Die Gasturbineneinrichtung weist einen Verdichter für Luft einen Verdichter für rückgeführtes Abgas, einen Brenner sowie eine Gasturbine auf.

Der Abwärmekessel umfasst eine mit einem Turbinenauslass der Gasturbineneinrichtung verbundene Kesseleingangsseite, einen mit einem Kamin verbundenen ersten Kesselausgang und einen zweiten Kesselausgang. Die Abgasrückführung verbindet nun den zweiten Kesselausgang mit einem Verdichtereinlass der Gasturbineneinrichtung. Bei der bekannten Gasturbinenanlage wird das rückgeführte Abgas in einem separaten Verdichter komprimiert. Ferner ist bei der bekannten Gasturbinenanlage eine Abgasnachbehandlungseinrichtung in Form eines Drei-Wege-Katalysators stromauf des Abwärmekessels angeordnet.

Eine weitere Gasturbinenanlage mit Abgasrezirkulation ist aus der WO 2008/155242 A1 bekannt, bei welcher die Abgasrückführung einen Strömungsteiler mit einem Verdichtereinlass verbindet. Dabei ist der Strömungsteiler stromab eines Abwärmekessels angeordnet und ermöglicht eine steuerbare Aufteilung des gesamten Abgasstroms auf einen zu einem Kamin führenden Teilstrom und einen durch die Abgasrückführung dem Verdichter rückgeführten Teilstrom.

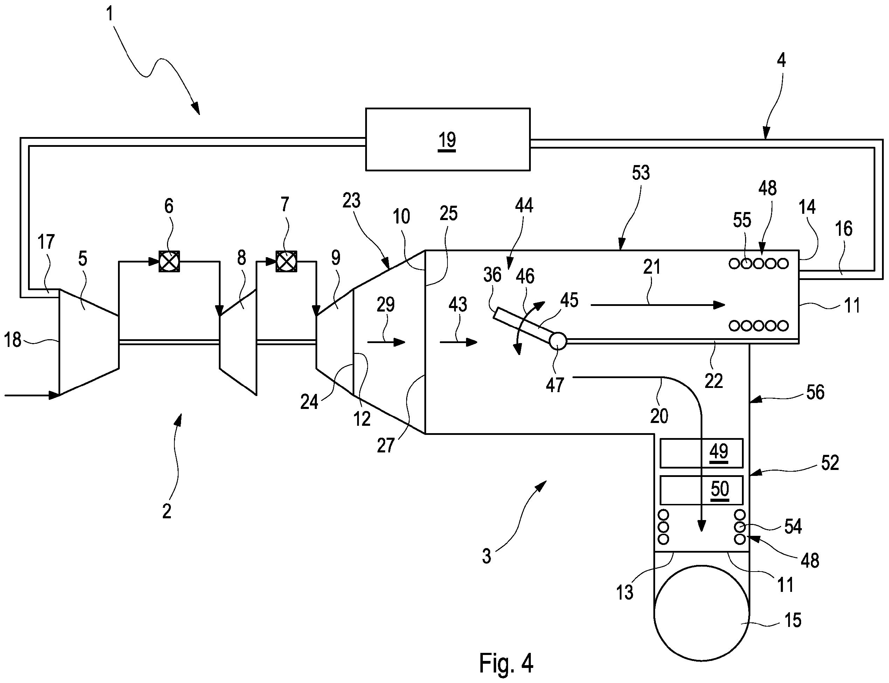

Zusätzlich zeigt auch die US2009/205334 die Rezirkulation unterschiedlicher Produktströme aus dem Abhitzekessel zu einem Gasturbinenverdichter und stellt dazu die Schaltung in Abbildung 4 schematisch dar. Dabei wird im Falle der Abgasrezirkulation nicht offenbart, an welcher Stelle das rezirkulierte Abgas im Abhitzekessel oder nach dem Abhitzekessel abgezweigt wird.

Aus der US 3 703 807 A ist eine Gasturbinenanlage mit einem Kessel bekannt, der einen Kesselausgang aufweist, der mit einem Kamin verbunden ist. Weiter führt von dem Kamin aus eine Abgasrückführung zu dem Verdichtereinlass der Gasturbine.

Die US 5267434 A) offenbart eine Gasturbinenanlage mit geteiltem Kessel, der zwei getrennten Kesselabgaspfade und zwei Kesselausgänge aufweist. Dabei sind die Kesselausgänge an einen gemeinsamen Kamin angeschlossen.

### Darstellung der Erfindung

Die vorliegende Offenbarung beschäftigt sich mit dem Problem, für eine Gasturbinenanlage der eingangs genannten Art eine verbesserte oder zumindest eine alternative Ausführungsform in Form des Gegenstandes des unabhängigen Anspruchs 1 anzugeben, die sich insbesondere dadurch auszeichnet, dass sie preiswerter realisierbar ist und/oder verbesserte Schadstoffemissionswerte aufweist.

Die Offenbarung beruht auf dem allgemeinen Gedanken, eine Abwärmekesselanordnung zu verwenden, die zwei zumindest teilweise voneinander getrennte Kesselabgaspfade aufweist, wobei ein erster Kesselabgaspfad von der Kesseleingangsseite zum ersten Kesselausgang führt, während ein zweiter Kesselabgaspfad von der Kesseleingangsseite zum zweiten Kesselausgang führt. Somit folgt das für den Kamin vorgesehene Abgas dem ersten Kesselabgaspfad, während das für die Abgasrückführung vorgesehene Abgas dem zweiten Kesselabgaspfad folgt. Durch die Bereitstellung voneinander getrennter Kesselabgaspfade innerhalb derselben Abwärmekesselanordnung ist es beispielsweise möglich, den Durchströmungswiderstand des ersten Kesselabgaspfads gezielt so auszulegen, dass sich die gewünschte Abgasrückführrate durch den zweiten Kesselabgaspfad quasi von selbst einstellt, ohne dass zusätzliche Maßnahmen zum Antreiben des rückzuführenden Abgases erforderlich sind. Beispielsweise kann der durchströmbare Querschnitt des ersten Kesselabgaspfads kleiner ausgelegt werden als der durchströmbare Querschnitt des zweiten Kesselabgaspfads, derart, dass sich die gewünschte Abgasrückführrate einstellt.

Beispielsweise kann gemäß einer vorteilhaften Ausführungsform vorgesehen sein, dass in der Abwärmekesselanordnung eine Kesseltrennwand angeordnet ist, welche die beiden Kesselabgaspfade voneinander trennt. Eine derartige Kesseltrennwand lässt sich im jeweiligen Abwärmekessel besonders leicht realisieren. Ferner kann die Kesseltrennwand zusätzliche Aufgaben übernehmen, wie beispielsweise eine Tragfunktion für weitere Komponenten des Abwärmekessels. Beispielsweise kann die Kesseltrennwand zur Befestigung von Rohren oder Leitungen einer Wärmetauscheranordnung dienen.

Gemäß einer anderen vorteilhaften Ausführungsform kann die Kesseleingangsseite einen gemeinsamen Kesseleingang aufweisen, von dem ein gemeinsamer Kesselhauptpfad ausgeht, der beabstandet von der Kesseleingangsseite an einer Kesselabzweigstelle in die beiden Kesselabgaspfade abzweigt. Mit anderen Worten, die beiden separaten Kesselabgaspfade erstrecken sich nicht durch die gesamte Abwärmekesselanordnung, sondern nur durch einen zu den beiden Kesselausgängen führenden Abschnitt der Abwärmekesselanordnung. Hierdurch lässt sich insbesondere die Aufteilung des Abgasgesamtstroms auf die beiden Kesselabgaspfade innerhalb der Abwärmekesselanordnung realisieren. Beispielsweise lassen sich dadurch aerodynamisch günstige Strömungsbedingungen schaffen.

Gemäß einer vorteilhaften Weiterbildung kann an der zuvor genannten Kesselabzweigstelle ein Steuerglied angeordnet sein, mit dessen Hilfe eine Aufteilung der Abgasströmung auf die beiden Kesselabgaspfade gesteuert werden kann. Mit Hilfe eines derartigen Steuerglieds lässt sich somit während des Betriebs der Gasturbinenanlage die Abgasrückführrate einstellen, beispielsweise um die Abgasrückführrate an sich ändernde Betriebszustände der jeweiligen Gasturbineneinrichtung anzupassen. Die Unterbringung des Steuerglieds in der Abwärmekesselanordnung ist dabei von besonderem Vorteil, da innerhalb der Abwärmekesselanordnung vergleichsweise große Strömungsquerschnitte zur Verfügung stehen, wodurch die herrschenden Strömungsgeschwindigkeiten vergleichsweise gering sind. Dementsprechend sind auch die an einem derartigen Steuerglied angreifenden Strömungskräfte entsprechend reduziert. Dies vereinfacht die Realisierung eines hinreichend stabilen Steuerglieds.

Bei einer anderen vorteilhaften Ausführungsform kann die Kesseleingangsseite einen ersten Kesseleingang und einen zweiten Kesseleingang aufweisen, wobei dann der erste Kesselabgaspfad vom ersten Kesseleingang zum ersten Kesselausgang führt, während der zweite Kesselabgaspfad getrennt vom ersten Kesselabgaspfad vom zweiten Kesseleingang zum zweiten Kesselausgang führt. Mit anderen Worten, die beiden Kesselabgaspfade sind von der Kesseleingangsseite bis zur Kesselausgangsseite in der Abwärmekesselanordnung getrennt geführt, so dass sie zwei voneinander getrennte Kesseleingänge mit zwei voneinander getrennten Kesselausgängen verbinden.

Zusätzlich oder alternativ kann zweckmäßig ein Diffusor vorgesehen sein, der an der Kesseleingangsseite angeordnet ist und sich dadurch charakterisiert, dass er einen in der Strömungsrichtung zunehmenden durchströmbaren Querschnitt besitzt. Im Diffusor nimmt somit der durchströmbare Querschnitt zu, während gleichzeitig die Strömungsgeschwindigkeit abnimmt. Der Diffusor ist somit zwischen der Abwärmekesselanordnung und dem Turbinenauslass angeordnet.

Besonders vorteilhaft ist nun eine Ausführungsform, bei welcher der Diffusor einen mit dem Turbinenauslass verbundenen Diffusoreingang, einen mit dem vorstehend genannten ersten Kesseleingang verbundenen ersten Diffusorausgang und einen mit dem vorstehend genannten zweiten Kesseleingang verbundenen zweiten Diffusorausgang aufweist. Vom Diffusoreingang geht dann ein gemeinsamer Diffusorhauptpfad aus, der an einer Diffusorabzweigstelle in zwei separate Diffusorabgaspfade teilt. Auf diese Weise erfolgt die Aufteilung der Abgasströmung in den für den Kamin bestimmten ersten Teilstrom und den für die Abgasrückführung bestimmten zweiten Teilstrom bereits innerhalb des Diffusors, was aus aerodynamischer Sicht als vorteilhaft angesehen wird. Eine derartige Ausführungsform ist besonders preiswert realisierbar, da im Diffusor genügend Bauraum zur Verfügung steht, um die gewünschten separaten Diffusorabgaspfade zu realisieren.

Entsprechend einer vorteilhaften Weiterbildung kann im Diffusor bzw. in einem Diffusorgehäuse eine Diffusortrennwand angeordnet sein, deren Anströmkante die zuvor genannte Diffusorabzweigstelle bildet und welche die beiden Diffusorabgaspfade bis zu den Diffusorausgängen trennt. Eine derartige Diffusortrennwand kann beispielsweise zur Aussteifung des Diffusorgehäuses genutzt werden, wodurch sich das Diffusorgehäuse einfacher mit hinreichender Stabilität realisieren lässt.

Besonders vorteilhaft ist nun eine Weiterbildung, bei welcher eine Abströmkante der Diffusortrennwand und eine Anströmkante der vorstehend genannten Kesseltrennwand aneinanderstoßen. Hierdurch wird die im Diffusor an der Diffusorabzweigstelle initiierte getrennte Abgasführung durch die beiden Diffusorabgaspfade lückenlos über die beiden Kesselabgaspfade durch die Abwärmekesselanordnung hindurchgeführt.

Entsprechend einer anderen vorteilhaften Weiterbildung kann an der zuvor genannten Diffusorabzweigstelle ein Steuerglied angeordnet sein, mit dessen Hilfe eine Aufteilung der Abgasströmung auf die beiden Diffusorabgaspfade gesteuert werden kann. Im Diffusor steht hinreichend Bauraum zur Verfügung, wodurch die Unterbringung eines derartigen Steuerglieds im Diffusor besonders einfach realisierbar ist.

Gemäß einer anderen vorteilhaften Ausführungsform kann die Abwärmekesselanordnung eine Wärmetauscheranordnung zum Kühlen des Abgases aufweisen, wobei die beiden Kesselabgaspfade separat und parallel vom Abgas durchströmt und durch die Wärmetauscheranordnung hindurchgeführt sind. Die Kühlung des dem Kamin zugeführten ersten Abgasteilstroms führt zu einer Nutzung der im Abgas noch enthaltenen Abwärme bevor der Abgasteilstrom in die Umgebung entlassen wird. Die Kühlung des der Abgasrückführung dienenden zweiten Abgasteilstroms kann ebenfalls zur Nutzung der im Abgas enthaltenen Wärme dienen. Sie führt weiter zu einer Reduktion Verdichtereintrittstemperatur. Auch kann die Kühlung des rückgeführten Abgases eine Reduzierung der NOx-Emissionen bewirken.

Gemäß einer anderen vorteilhaften Ausführungsform kann vorgesehen sein, dass in der Abwärmekesselanordnung ausschließlich im ersten Kesselabgaspfad zumindest eine Abgasbehandlungseinrichtung angeordnet ist. Mit anderen Worten im zweiten Kesselabgaspfad ist keine Abgasbehandlungseinrichtung angeordnet. Sofern die zuvor genannten Diffusorabgaspfade hinzukommen, gilt Entsprechendes, so dass nur in der Anordnung aus erstem Diffusorabgaspfad und erstem Kesselabgaspfad zumindest eine Abgasbehandlungseinrichtung angeordnet ist, während in der Anordnung aus zweitem Diffusorabgaspfad und zweitem Kesselabgaspfad keine Abgasbehandlungseinrichtung angeordnet ist. Abgasbehandlungseinrichtungen sind vorwiegend Katalysatoren und Partikelfilter. Katalysatoren, die als Abgasbehandlungseinrichtung im ersten Kesselabgaspfad oder alternativ im ersten Diffusorabgaspfad zum Einsatz kommen können, sind beispielsweise ein NOx-Katalysator, ein CO-Katalysator, ein SCR-Katalysator oder ein NSCR-Katalysator. Dabei steht SCR für "Selective Catalytic Reduction", während NSCR für "Non-Selective Catalytic Reduction" steht. Die Ausstattung nur des ersten Kesselabgaspfads bzw. des ersten Diffusorabgaspfads mit wenigstens einer Abgasnachbehandlungseinrichtung beruht auf der Überlegung, dass nur durch den ersten Abgaspfad geführtes Abgas zum Kamin gelangt und somit letztlich in die Umgebung emittiert wird, während das dem zweiten Abgaspfad folgende Abgas erneut der Verbrennung zugeführt wird. Folglich ist eine Abgasbehandlung des rückgeführten Abgases unnötig. Diese Überlegung führt nun dazu, dass die jeweilige Abgasbehandlungseinrichtung nur für einen reduzierten Abgasstrom ausgelegt werden muss, wodurch die Kosten zur Realisierung der Abgasbehandlung reduziert werden können. Gleichzeitig kann über die Unterbringung der jeweiligen Abgasbehandlungseinrichtung im ersten Kesselabgaspfad der Durchströmungswiderstand im ersten Kesselabgaspfad gegenüber dem zweiten Kesselabgaspfad vergleichsweise einfach und ohne zusätzliche Maßnahmen erhöht werden, wodurch die gewünschte Abgasaufteilung auf die Abgasrückführung, also die gewünschte Abgasrückführrate, vergleichsweise einfach realisierbar ist.

Gemäß einer anderen vorteilhaften Ausführungsform kann die Abwärmekesselanordnung einen gemeinsamen Abwärmekessel aufweisen, in dem die beiden Kesselabgaspfade ausgebildet sind und der den jeweiligen Kesseleingang sowie den jeweiligen Kesselausgang aufweist. Diese Ausführungsform lässt sich besonders einfach realisieren, da beispielsweise ein konventioneller Abwärmekessel verwendet werden kann, in dem durch Einsetzen einer Kesseltrennwand die beiden Kesselabgaspfade ausgebildet werden können.

Entsprechend einer zweckmäßigen Weiterbildung kann der gemeinsame Abwärmekessel eine gemeinsame Wärmetauscheranordnung aufweisen, durch welche beide Kesselabgaspfade hindurchgeführt sind. Auch hier ist es grundsätzlich möglich, einen konventionellen Abwärmekessel zu verwenden, in dem durch Einziehen einer Kesseltrennwand die beiden Kesselabgaspfade realisiert werden. Somit ergibt sich eine besonders einfache und preiswerte Realisierbarkeit. Die beiden Kesselabgaspfade sind zweckmäßig voneinander getrennt und parallel durch die gemeinsame Wärmetauscheranordnung hindurchgeführt.

Gemäß einer alternativen Ausführungsform kann die Abwärmekesselanordnung einen ersten Abwärmekessel, in dem der erste Kesselabgaspfad ausgebildet ist, und einen zweiten Abwärmekessel aufweisen, in dem der zweite Kesselabgaspfad ausgebildet ist. Durch die Bereitstellung von zwei separaten Abwärmekesseln können die beiden Abwärmekessel besser auf die jeweils benötigten Volumenströme adaptiert werden. Allerdings ist der bauliche Aufwand größer als bei einer Ausführungsform mit einem gemeinsamen Abwärmekessel. Gemäß einer zweckmäßigen Weiterbildung kann die Wärmetauscheranordnung einen im ersten Abwärmekessel angeordneten ersten Wärmetauscher und einen im zweiten Abwärmekessel angeordneten zweiten Wärmetauscher aufweisen, wobei der erste Kesselabgaspfad durch den ersten Wärmetauscher hindurchgeführt ist, während der zweite Kesselabgaspfad durch den zweiten Wärmetauscher hindurchgeführt ist. Somit stehen zwei separate Wärmetauscher zur Verfügung, um die in den beiden Abgaspfaden getrennt geführten Abgasströme separat zu kühlen. Insbesondere lassen sich dadurch die Temperaturen der beiden Abgasströme separat einstellen.

Die beiden separaten Abwärmekessel können dabei in separaten Gehäusen oder alternativ in einem gemeinsamen Gehäuse untergebracht sein. Zweckmäßig kann auch eine Ausführungsform sein, bei welcher der zum Kamin führende erste Kesselabgaspfad insgesamt oder zumindest in einem zum Kamin führenden Abschnitt gegenüber dem zweiten Kesselabgaspfad geneigt verläuft, vorzugsweise um etwa 90°. Auf diese Weise lassen sich vorhandene Bauräume erheblich besser ausnutzen.

Bei einer anderen vorteilhaften Ausführungsform kann der erste Kesselausgang außerdem mit einer Abgasnachbehandlungsanlage verbunden sein. Mit anderen Worten, bei dieser Ausführungsform kann zusätzlich oder alternativ zu der wenigstens einen in der Abwärmekesselanordnung vorgesehenen Abgasbehandlungseinrichtung stromab der Abwärmekesselanordnung zumindest eine Abgasnachbehandlungseinrichtung angeordnet sein. Eine derartige Abgasnachbehandlungsanlage ist beispielsweise eine CCS-Anlage, wobei CCS für Carbon Capture and Storage steht. Ebenso können auch andere Abgasnachbehandlungsanlagen vorgesehen sein. Zweckmäßig kann nun ein Abgassteuerglied vorgesehen sein, mit dessen Hilfe eine Aufteilung der Abgasströmung des zweiten Kesselabgaspfads auf die Abgasnachbehandlungsanlage und den Kamin gesteuert werden kann. Somit lässt sich bedarfsabhängig der dem Kamin zugeordnete erste Abgasteilstrom teilweise oder vollständig durch die Abgasnachbehandlungsanlage leiten. Ebenso ist grundsätzlich eine Umgehung der Abgasnachbehandlungsanlage durch den Kamin einstellbar.

Die Abgasrückführung kann gemäß einer vorteilhaften Ausführungsform mit einer zusätzlichen Kühleinrichtung ausgestattet sein, die beispielsweise als DCC-Einrichtung ausgestaltet sein kann, wobei DCC für "Direct Contact Cooler" steht. Eine derartige DCC-Einrichtung ermöglicht gleichzeitig ein Kühlen und Waschen des rückgeführten Abgases.

Weitere wichtige Merkmale und Vorteile der sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Offenbarung zu verlassen.

### Kurze Beschreibung der Zeichnungen

Bevorzugte Ausführungsbeispiele sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1 und 2: stark vereinfachte, schaltplanartige Seitenansichten einer Gasturbinenanlage bei verschiedenen Ausführungsformen,
- Fig. 3 bis 5: stark vereinfachte, schaltplanartige Draufsichten der Gasturbinenanlage bei weiteren, verschiedenen Ausführungsformen.

### Ausführung der Erfindung

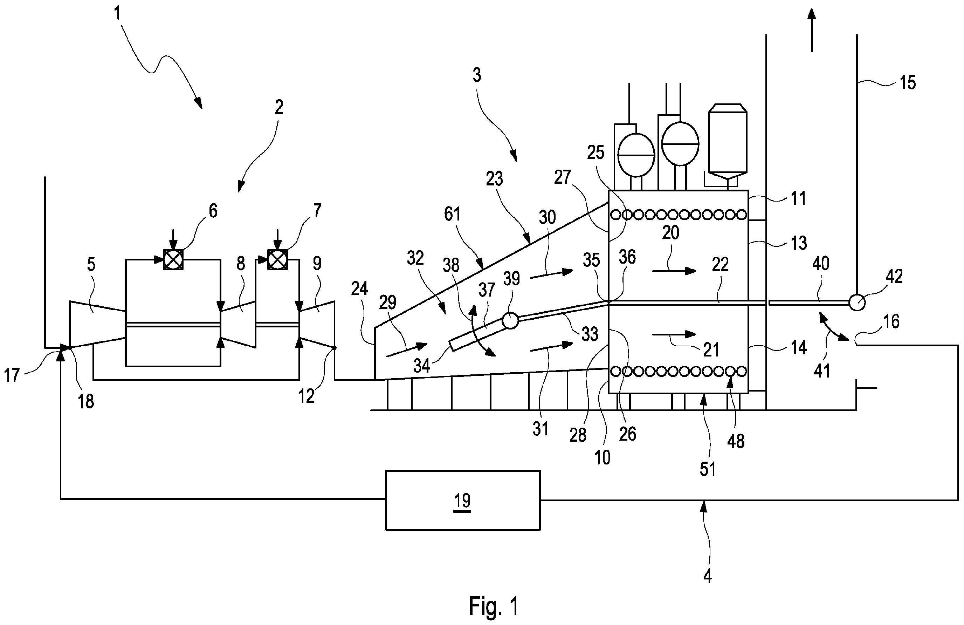

Entsprechend den Figuren 1 bis 5 umfasst eine Gasturbinenanlage 1, die beispielsweise in einer Kraftwerksanlage zur Stromerzeugung verwendet werden kann, zumindest eine Gasturbineneinrichtung 2, zumindest eine Abwärmekesselanordnung 3 sowie zumindest eine Abgasrückführung 4. Die jeweilige Gasturbineneinrichtung 2 umfasst wenigstens einen Verdichter 5, zumindest einen Brenner 6 bzw. 7 sowie wenigstens eine Gasturbine 8 bzw. 9. Bei den hier gezeigten Ausführungsformen umfasst die Gasturbineneinrichtung 2 jeweils zwei Gasturbinen 8 und 9, nämlich eine Hochdruck-Gasturbine 8 und eine Niederdruck-Gasturbine 9. Dementsprechend sind auch zwei Brenner 6 und 7 vorgesehen, nämlich ein der Hochdruck-Gasturbine 8 vorgeschalteter Hochdruck-Brenner 6 und ein der Niederdruck-Gasturbine 9 vorgeschalteter Niederdruck-Brenner 7.

Die Abwärmekesselanordnung 3 besitzt eine Kesseleingangsseite 10 und eine Kesselausgangsseite 11. Die Kesseleingangsseite 10 ist fluidisch mit einem Turbinenauslass 12 der Niederdruck-Gasturbine 9 verbunden. Die Kesselausgangsseite 11 besitzt einen ersten Kesselausgang 13 und einen zweiten Kesselausgang 14. Der erste Kesselausgang 13 ist mit einem Kamin 15 verbunden. Der zweite Kesselausgang 14 ist mit einem Einlass 16 der Abgasrückführung 4 verbunden. Ein Auslass 17 der Abgasrückführung 4 ist mit einem Verdichtereinlass 18 des Verdichters 5 fluidisch verbunden. Somit verbindet die Abgasrückführung 4 den zweiten Kesselausgang 14 mit dem Verdichtereinlass 18. Im Beispiel ist in der Abgasrückführung 4 ein Abgasrückführkühler 19 angeordnet, der vorzugsweise als DCC-Einrichtung ausgestaltet ist, so dass mit dem Abgasrückführkühler 19 das rückgeführte Abgas gekühlt und gleichzeitig gewaschen werden kann. DCC steht dabei für Direct Contact Cooler.

Bei den hier gezeigten Ausführungsformen weist die Abwärmekesselanordnung 3 einen ersten Kesselabgaspfad 20 auf, der in den Figuren 1 bis 5 durch einen Pfeil angedeutet ist. Der erste Kesselabgaspfad 20 ist mit der Kesseleingangsseite 10 verbunden und führt zum ersten Kesselausgang 13. Ferner enthält die Abwärmekesselanordnung 3 einen zweiten Kesselabgaspfad 21, der ebenfalls durch einen Pfeil angedeutet ist. Der zweite Kesselabgaspfad 21 ist ebenfalls mit der Kesseleingangsseite 10 fluidisch verbunden und führt zum zweiten Kesselausgang 14. Dabei führen die beiden Kesselabgaspfade 20, 21 getrennt zu den beiden Kesselausgängen 13, 14. Zur Realisierung der beiden Kesselabgaspfade 20, 21 innerhalb der Abwärmekesselanordnung 3 kann eine Kesseltrennwand 22 vorgesehen sein, die hierzu in der jeweiligen Abwärmekesselanordnung 3 angeordnet ist und dabei die beiden Kesselabgaspfade 20, 21 fluidisch voneinander trennt.

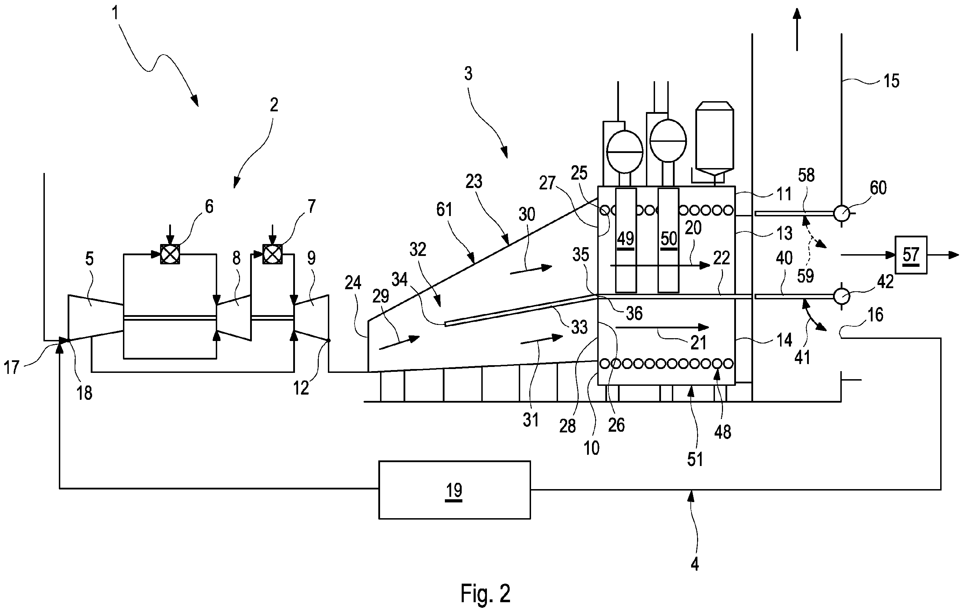

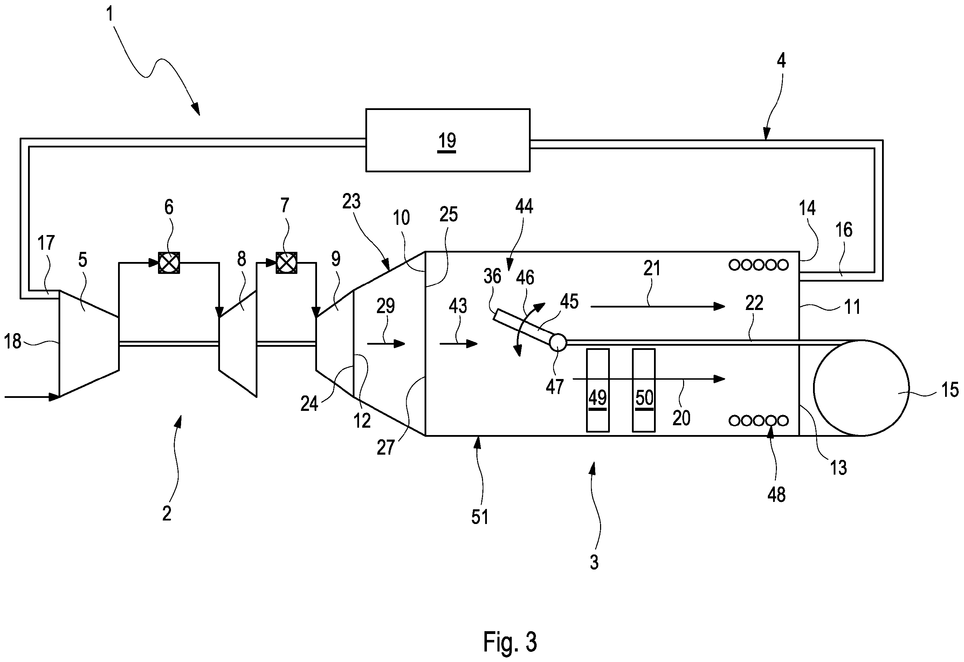

Bei den hier gezeigten Ausführungsformen ist an der Kesseleingangsseite 10 jeweils ein Diffusor 23 angeordnet, der einen Diffusoreingang 24 und zumindest einen Diffusorausgang 25, 26 aufweist. Bei den Ausführungsformen der Figuren 1 und 2 sind zwei Diffusorausgänge, nämlich ein erster Diffusorausgang 25 und ein zweiter Diffusorausgang 26 vorgesehen. Im Unterschied dazu ist bei den Ausführungsformen der Figuren 3-5 nur ein einziger, gemeinsamer Diffusorausgang 25 vorgesehen. Der Diffusoreingang 24 ist mit dem Turbinenauslass 12 verbunden.

Bei den Ausführungsformen der Figuren 3 bis 5 ist der gemeinsame Diffusorausgang 25 mit der Kesseleingangsseite 10 fluidisch verbunden. Bei den Ausführungsformen der Figuren 1 und 2 ist dagegen der erste Diffusorausgang 25 mit einem ersten Kesseleingang 27 fluidisch verbunden, während der zweite Diffusorausgang 26 mit einem zweiten Kesseleingang 28 fluidisch verbunden ist. Die beiden Kesseleingänge 27, 28 sind dabei an der Kesseleingangsseite 10 ausgebildet. Bei den Ausführungsformen der Figuren 1 und 2 führt der erste Kesselabgaspfad 20 somit vom ersten Kesseleingang 27 zum ersten Kesselausgang 13. Parallel und separat dazu führt der zweite Kesselabgaspfad 21 vom zweiten Kesseleingang 28 zum zweiten Kesselausgang 14.

Im Diffusor 23 sind bei den in den Figuren 1 und 2 gezeigten Ausführungsformen ein gemeinsamer Diffusorhauptpfad 29, der durch einen Pfeil angedeutet ist, sowie ein erster Diffusorabgaspfad 30, der durch einen Pfeil angedeutet ist, und ein zweiter Diffusorabgaspfad 31 ausgebildet, der ebenfalls durch einen Pfeil angedeutet ist. Der gemeinsame Diffusorhauptpfad 29 zweigt an einer Diffusorabzweigstelle 32 in die beiden getrennten Diffusorabgaspfade 30, 31 auf. Zur Realisierung der beiden getrennten Diffusorabgaspfade 30, 31 ist in einem Diffusorgehäuse 61 des Diffusors 23 eine Diffusortrennwand 33 angeordnet. Eine Anströmkante 34 der Diffusortrennwand 33 definiert die Diffusorabzweigstelle 32. Die Diffusortrennwand 33 trennt die beiden Diffusorabgaspfade 30, 31 von der Diffusorabzweigstelle 32 bis zu den beiden Diffusorausgängen 25, 26. In den Beispielen der Figuren 1 und 2 sind die Diffusortrennwand 33 und die Kesseltrennwand 22 so angeordnet, dass eine Abströmkante 35 der Diffusortrennwand 33 und eine Anströmkante 36 der Kesseltrennwand 22 aneinanderstoßen.

Durch die aneinanderstoßenden Trennwände 22, 33 geht der erste Diffusorabgaspfad 30 direkt in den ersten Kesselabgaspfad 20 über, während gleichzeitig der zweite Diffusorabgaspfad 31 in den zweiten Kesselabgaspfad 21 übergeht. Auf diese Weise werden innerhalb der Einheit aus Diffusor 23 und Abwärmekesselanordnung 3 ein gemeinsamer erster Abgaspfad 20-30, der aus dem ersten Kesselabgaspfad 20 und dem ersten Diffusorabgaspfad 30 besteht, und ein gemeinsamer zweiter Abgaspfad 21-31 gebildet, der aus dem zweiten Kesselabgaspfad 21 und dem zweiten Diffusorabgaspfad 31 besteht.

Im Beispiel der Figur 1 ist an der Diffusorabzweigstelle 32 ein Steuerglied 37 angeordnet, das entsprechend einem Doppelpfeil 38 um eine Schwenkachse 39 schwenkverstellbar ist. Mit Hilfe des Steuerglieds 37 kann eine Aufteilung der Abgasströmung auf die beiden Diffusorabgaspfade 30, 31 gesteuert werden.

Bei der in Figur 2 gezeigten Ausführungsform fehlt ein derartiges eingangsseitiges Steuerglied 37, das an der Diffusorabzweigstelle 32 angeordnet ist. Dafür ist bei der in Figur 2 gezeigten Ausführungsform an der Kesselausgangsseite 11 ein anderes, ausgangsseitiges Steuerglied 40 angeordnet, das entsprechend einem Doppelpfeil 41 um eine Schwenkachse 42 schwenkbar ist. Mit Hilfe dieses Steuerglieds 40 kann eine Aufteilung der durch den zweiten Kesselabgaspfad 21 strömenden Abgasströmung auf die Abgasrückführung 4 und den Kamin 15 gesteuert werden. In Figur 1 ist angedeutet, dass ein derartiges ausgangsseitiges Steuerglied 40 auch kumulativ zu dem an der Diffusorabzweigstelle 32 angeordneten eingangsseitigen Steuerglied 37 vorgesehen werden kann. In der vorliegenden Erfindung wird bei einer Realisierung mit dem schwenkbaren Steuerglied 40 gemäß der schematischen Darstellung in den Figuren 1 und 2 zusätzlich gefordert, dass die Abgasrückführung zwischen dem zweiten Kesselausgang (14) und dem Verdichtereinlass (18) fluidisch von dem Kamin getrennt ist.

Bei den Ausführungsformen der Figuren 3 bis 5 enthält der Diffusor 23 keine zwei getrennten Diffusorabgaspfade 30, 31, sondern nur einen gemeinsamen, durchgehenden Diffusorhauptpfad 29. Auch besitzt die Kesseleingangsseite 10 nur einen gemeinsamen Kesseleingang, der im Folgenden ebenfalls mit 27 bezeichnet wird. Von diesem gemeinsamen Kesseleingang 27 geht ein durch einen Pfeil angedeuteter gemeinsamer Kesselhauptpfad 43 aus, der an einer Kesselabzweigstelle 44 in die beiden Kesselabgaspfade 20, 21 teit. In den Beispielen der Figuren 3 bis 5 ist an dieser Kesselabzweigstelle 44 ein internes Steuerglied 45 angeordnet, das entsprechend einem Doppelpfeil 46 um eine Schwenkachse 47 verstellbar ist. Mit Hilfe dieses Steuerglieds 45 kann eine Aufteilung der Abgasströmung auf die beiden Kesselabgaspfade 20, 21 gesteuert werden.

Die jeweilige Abwärmekesselanordnung 3 umfasst zumindest eine Wärmetauscheranordnung 48. Die Wärmetauscheranordnung 48 dient zum Kühlen des Abgases und arbeitet zweckmäßig mit einem Kühlmittel, z.B. Wasser, das mediengetrennt vom Abgas in der Wärmetauscheranordnung 48 zirkuliert. Die beiden Kesselabgaspfade 20, 21 sind parallel und separat durch diese Wärmetauscheranordnung 48 hindurchgeführt.

Wie sich den Figuren 2 bis 5 entnehmen lässt, ist innerhalb der Abwärmekesselanordnung 3 ausschließlich im ersten Kesselabgaspfad 20 zumindest eine Abgasbehandlungseinrichtung 49, 50 angeordnet. Rein beispielhaft sind in dem ersten Kesselabgaspfad 20 hintereinander zwei Abgasbehandlungseinrichtungen 49, 50 angeordnet, nämlich eine anströmseitige, erste Abgasbehandlungseinrichtung 49 und eine abströmseitig angeordnete, zweite Abgasbehandlungseinrichtung 50. Rein exemplarisch handelt es sich bei der ersten Abgasbehandlungseinrichtung um einen CO-Katalysator, während es sich bei der zweiten Abgasbehandlungseinrichtung 50 um einen NOx-Katalysator handelt. Die wenigstens eine Abgasbehandlungseinrichtung 49, 50 erhöht den Durchströmungswiderstand des ersten Kesselabgaspfads 20, was eine Strömungsführung durch die Abgasrückführung 4 vereinfacht.

Bei den Ausführungsformen der Figuren 1 bis 3 und 5 ist die Abwärmekesselanordnung 3 jeweils durch einen einzigen, gemeinsamen Abwärmekessel 51 gebildet. In diesem gemeinsamen Abwärmekessel 51 sind die beiden Kesselabgaspfade 20, 21 ausgebildet. Ferner besitzt dieser gemeinsame Abwärmekessel 51 den jeweiligen Kesseleingang 27, 28 sowie den jeweiligen Kesselausgang 13, 14. Auch ist bei der Verwendung eines gemeinsamen Abwärmekessels 51 zweckmäßig eine gemeinsame Wärmetauscheranordnung 48 vorgesehen, durch welche dann beide Kesselabgaspfade 20, 21 parallel und separat hindurchgeführt sind.

Im Unterschied dazu zeigt nun Figur 4 eine Variante, bei der die Abwärmekesselanordnung 3 zwei separate Abwärmekessel 52 bzw. 53, nämlich einen ersten Abwärmekessel 52 und einen zweiten Abwärmekessel 53 aufweist. Im ersten Abwärmekessel 52 ist der erste Kesselabgaspfad 20 ausgebildet, während im zweiten Abwärmekessel 53 der zweite Kesselabgaspfad 21 ausgebildet ist. Bei dieser speziellen Ausführungsform umfasst die zuvor genannte Wärmetauscheranordnung 48 einen ersten Wärmetauscher 54 und einen zweiten Wärmetauscher 55. Der erste Wärmetauscher 54 ist im ersten Abwärmekessel 52 angeordnet und vom ersten Kesselabgaspfad 20 durchströmt. Der zweite Wärmetauscher 55 ist im zweiten Abwärmekessel 53 angeordnet und vom zweiten Kesselabgaspfad 21 durchströmt. Im Beispiel der Figur 4 sind die beiden separaten Abwärmekessel 52, 53 in einem gemeinsamen Gehäuse 56 angeordnet. Grundsätzlich ist jedoch auch eine Ausführungsform denkbar, bei der die beiden Abwärmekessel 52, 53 separate Gehäuse besitzen. Ferner zeigt die Figur 4 eine spezielle Ausführungsform, bei welcher die beiden Abwärmekessel 52, 53 relativ zueinander so angeordnet sind, dass der erste Kesselabgaspfad 20 zumindest in einem zum Kamin 15 führenden Endabschnitt gegenüber der Längsrichtung des zweiten Kesselabgaspfads 21 geneigt ist, im Beispiel um etwa 90°.

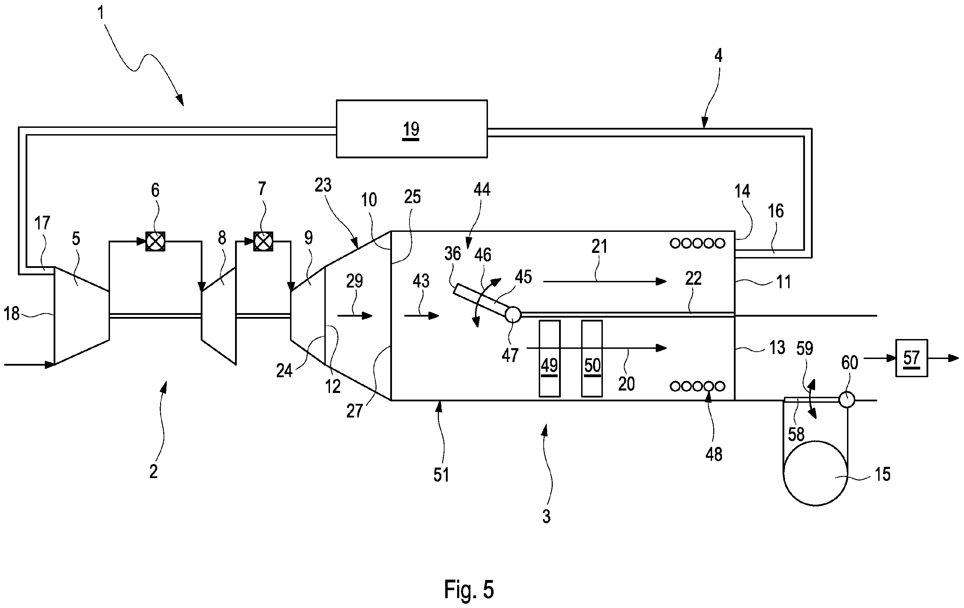

Gemäß den Figuren 2 und 5 kann der erste Kesselausgang 13 außerdem mit einer Abgasnachbehandlungsanlage 57 fluidisch verbunden sein. Bei dieser Abgasnachbehandlungsanlage 57 kann es sich beispielsweise um eine CCS-Einrichtung handeln, die Kohlenstoffdioxid abscheidet und einlagern kann. CCS steht dabei für Carbon Capture and Storage. Eine derartige Abgasnachbehandlungsanlage 57 kann bspw. auch als Partikelfilter ausgestaltet sein, mit dessen Hilfe im rückgeführten Abgas mitgeführte Rußpartikel aus dem Abgasstrom herausgefiltert werden können.

Bei den Ausführungsformen der Figuren 2 und 5 ist außerdem ein Abgassteuerglied 58 vorgesehen, das entsprechend einem Doppelpfeil 59 um eine Schwenkachse 60 verstellbar ist. Mit Hilfe dieses Abgassteuerglieds 58 lässt sich eine Aufteilung der Abgasströmung des ersten Kesselabgaspfads 20 auf besagte Abgasnachbehandlungsanlage 57 und auf den Kamin 15 steuern.

### Bezugszeichenliste

- 1: Gasturbinenanlage
- 2: Gasturbineneinrichtung
- 3: Abwärmekesselanordnung
- 4: Abgasrückführung
- 5: Verdichter
- 6: Hochdruck-Brenner
- 7: Niederdruck-Brenner
- 8: Hochdruck-Gasturbine
- 9: Niederdruck-Gasturbine
- 10: Eingangsseite von 3
- 11: Ausgangsseite von 3
- 12: Turbinenauslass
- 13: erster Kesselausgang
- 14: zweiter Kesselausgang
- 15: Kamin
- 16: Eingang von 4
- 17: Ausgang von 4
- 18: Verdichtereinlass
- 19: Abgasrückführkühler
- 20: erster Kesselabgaspfad
- 21: zweiter Kesselabgaspfad
- 22: Kesseltrennwand
- 23: Diffusor
- 24: Diffusoreingang
- 25: gemeinsamer Diffusorausgang / erster Diffusorausgang
- 26: zweiter Diffusorausgang
- 27: gemeinsamer Kesseleingang / erster Kesseleingang
- 28: zweiter Kesseleingang
- 29: Diffusorhauptpfad
- 30: erster Diffusorabgaspfad
- 31: zweiter Diffusorabgaspfad
- 32: Diffusorabzweigstelle
- 33: Diffusortrennwand
- 34: Anströmkante von 33
- 35: Abströmkante von 33
- 36: Anströmkante von 22
- 37: Steuerglied
- 38: Bewegungsrichtung von 37
- 39: Drehachse von 37
- 40: Steuerglied
- 41: Bewegungsrichtung von 40
- 42: Drehachse von 40
- 43: Kesselhauptpfad
- 44: Kesselabzweigstelle
- 45: Steuerglied
- 46: Bewegungsrichtung von 45
- 47: Drehachse von 45
- 48: Wärmetauscheranordnung
- 49: Abgasbehandlungseinrichtung / CO-Katalysator
- 50: Abgasbehandlungseinrichtung / NOx-Katalysator
- 51: gemeinsamer Abwärmekessel
- 52: erster Abwärmekessel
- 53: zweiter Abwärmekessel
- 54: erster Wärmetauscher
- 55: zweiter Wärmetauscher
- 56: gemeinsames Gehäuse
- 57: Abgasnachbehandlungsanlage / CCS-Einrichtung
- 58: Steuerglied
- 59: Bewegungsrichtung von 58
- 60: Drehachse von 58
- 61: Diffusorgehäuse

## Patentansprüche

1. Gasturbinenanlage,
- mit mindestens einer Gasturbineneinrichtung (2), die zumindest einen Verdichter (5), wenigstens einen Brenner (6, 7) und mindestens eine Gasturbine (8, 9) aufweist,
- mit mindestens einer Abwärmekesselanordnung (3), die eine mit einem Turbinenauslass (12) der Gasturbineneinrichtung (2) verbundene Kesseleingangsseite (10), einen mit einem Kamin (15) verbundenen ersten Kesselausgang (13) und einen zweiten Kesselausgang (14) aufweist,
- mit einer Abgasrückführung (4), die den zweiten Kesselausgang (14) mit einem Verdichtereinlass (18) der Gasturbineneinrichtung (2) verbindet,
**dadurch gekennzeichnet,**
- **dass** die Abwärmekesselanordnung (3) einen ersten Kesselabgaspfad (20) aufweist, der mit der Kesseleingangsseite (10) verbunden ist und zum ersten Kesselausgang (13) führt,
- **dass** die Abwärmekesselanordnung (3) einen zweiten Kesselabgaspfad (21) aufweist, der mit der Kesseleingangsseite (10) verbunden ist und getrennt vom ersten Kesselabgaspfad (20) zum zweiten Kesselausgang (14) führt und
- **dass** die Abgasrückführung (4) zwischen dem zweiten Kesselausgang (14) und dem Verdichtereinlass (18) fluidisch von dem Kamin (15) getrennt ist.

2. Gasturbinenanlage nach Anspruch 1
**dadurch gekennzeichnet,**
**dass** in der Abwärmekesselanordnung (3) eine Kesseltrennwand (22) angeordnet ist, welche die beiden Kesselabgaspfade (20, 21) voneinander trennt.

3. Gasturbinenanordnung nach Anspruch 1 oder 2,
**dadurch gekennzeichnet,**
**dass** die Kesseleingangsseite (10) einen gemeinsamen Kesseleingang (27) aufweist, von dem ein gemeinsamer Kesselhauptpfad (43) ausgeht, der an einer Kesselabzweigstelle (44) in die beiden Kesselabgaspfade (20, 21) aufgeteilt ist.

4. Gasturbinenanlage nach Anspruch 3,
**dadurch gekennzeichnet,**
**dass** an der Kesselabzweigstelle (44) ein Steuerglied (45) zum Steuern einer Aufteilung der Abgasströmung auf die beiden Kesselabgaspfade (20, 21) angeordnet ist.

5. Gasturbinenanlage nach Anspruch 1 oder 2,
**dadurch gekennzeichnet,**
- **dass** die Kesseleingangsseite (10) einen ersten Kesseleingang (27) und einen zweiten Kesseleingang (28) aufweist,
- **dass** der erste Kesselabgaspfad (20) vom ersten Kesseleingang (27) zum ersten Kesselausgang (13) führt,
- **dass** der zweite Kesselabgaspfad (21) getrennt vom ersten Kesselabgaspfad (20) vom zweiten Kesseleingang (28) zum zweiten Kesselausgang (14) führt,
- **dass** an der Kesseleingangsseite (10) ein Diffusor (23) angeordnet ist, der einen mit dem Turbinenauslass (12) verbundenen Diffusoreingang (24), einen mit dem ersten Kesseleingang (27) verbundenen ersten Diffusorausgang (25) und einen mit dem zweiten Kesseleingang (28) verbundenen zweiten Diffusorausgang (26) aufweist,
- **dass** vom Diffusoreingang (24) ein gemeinsamer Diffusorhauptpfad (29) ausgeht, der an einer Diffusorabzweigstelle (32) in zwei voneinander getrennte Diffusorabgaspfade (30, 31) geteilt ist.

6. Gasturbinenanlage nach Anspruch 5,
**dadurch gekennzeichnet,**
**dass** im Diffusor (23) eine Diffusortrennwand (33) angeordnet ist, deren Anströmkante (34) die Diffusorabzweigstelle (32) bildet und welche die beiden Diffusorabgaspfade (30, 31) bis zu den Diffusorausgängen (25, 26) trennt.

7. Gasturbinenanlage nach den Ansprüchen 2 und 6,
**dadurch gekennzeichnet,**
**dass** eine Abströmkante (35) der Diffusortrennwand (33) und eine Anströmkante (36) der Kesseltrennwand (22) aneinander stoßen.

8. Gasturbinenanlage nach Anspruch 5 oder 7,
**dadurch gekennzeichnet**,
an der Diffusorabzweigstelle (32) ein Steuerglied (37) zum Steuern einer Aufteilung der Abgasströmung auf die beiden Diffusorabgaspfade (30, 31) angeordnet ist.

9. Gasturbinenanlage nach einem der Ansprüche 1 bis 8,
**dadurch gekennzeichnet,**
- **dass** die Abwärmekesselanordnung (3) eine Wärmetauscheranordnung (48) zum Kühlen des Abgases aufweist,
- **dass** beide Kesselabgaspfade (20, 21) separat durch die Wärmetauscheranordnung (48) hindurchgeführt sind.

10. Gasturbinenanlage nach einem der Ansprüche 1 bis 9,
**dadurch gekennzeichnet,**
**dass** in der Abwärmekesselanordnung (3) nur im ersten Kesselabgaspfad (20) zumindest eine Abgasbehandlungseinrichtung (49, 50) angeordnet ist.

11. Gasturbinenanlage nach einem der Ansprüche 1 bis 10,
**dadurch gekennzeichnet,**
**dass** die Abwärmekesselanordnung (3) einen gemeinsamen Abwärmekessel (51) aufweist, in dem die beiden Kesselabgaspfade (20, 21) ausgebildet sind und der den jeweiligen Kesseleingang (27, 28) sowie den jeweiligen Kesselausgang (13, 14) aufweist.

12. Gasturbinenanlage nach Anspruch 11,
**dadurch gekennzeichnet,**
**dass** der Abwärmekessel (51) eine gemeinsame Wärmetauscheranordnung (48) aufweist, durch welche beide Kesselabgaspfade (20, 21) hindurchgeführt sind.

13. Gasturbinenanlage nach einem der Ansprüche 1 bis 10,
**dadurch gekennzeichnet,**
**dass** die Abwärmekesselanordnung (3) einen ersten Abwärmekessel (52), in dem der erste Kesselabgaspfad (20) ausgebildet ist, und einen zweiten Abwärmekessel (53) aufweist, in dem der zweite Kesselabgaspfad (21) ausgebildet ist.

14. Gasturbinenanlage nach Anspruch 13,
**dadurch gekennzeichnet,**
**dass** eine Wärmetauscheranordnung (48) einen im ersten Abwärmekessel (52) angeordneten ersten Wärmetauscher (54), durch den der erste Kesselabgaspfad (20) hindurchgeführt ist, sowie einen im zweiten Abwärmekessel (53) angeordneten zweiten Wärmetauscher (55) aufweist, durch den der zweite Kesselabgaspfad (21) hindurchgeführt ist.

15. Gasturbinenanlage nach einem der Ansprüche 1 bis 14,
**dadurch gekennzeichnet,**
- **dass** der erste Kesselausgang (13) außerdem mit einer Abgasnachbehandlungsanlage (57) verbunden ist,
- **dass** ein Abgassteuerglied (58) zum Steuern einer Aufteilung der Abgasströmung des ersten Kesselabgaspfads (20) auf die Abgasnachbehandlungsanlage (57) und auf den Kamin (15) vorgesehen ist.

## Claims

1. Gas turbine plant,
- with at least one gas turbine device (2) comprising at least one compressor (5), at least one burner (6, 7) and at least one gas turbine (8, 9),
- with at least one waste heat boiler arrangement (3) which comprises a boiler input side (10) connected to a turbine outlet (12) of the gas turbine device (2), a first boiler output (13) connected to a flue (15), and a second boiler output (14),
- with an exhaust gas recirculation system (4) which connects the second boiler output (14) to a compressor inlet (18) of the gas turbine device (2),
**characterised in that**
- the waste heat boiler arrangement (3) has a first boiler exhaust gas path (20) which is connected to the boiler input side (10) and leads to the first boiler output (13),
- the waste heat boiler arrangement (3) has a second boiler exhaust gas path (21) which is connected to the boiler input side (10) and leads, separately from the first boiler exhaust gas path (20), to the second boiler output (14), and
- the exhaust gas recirculation (4) between the second boiler output (14) and the compressor inlet (18) is fluidically separated from the flue (15).

2. Gas turbine plant according to claim 1, **characterised in that** a boiler partition wall (22) is arranged in the waste heat boiler arrangement (3) and separates the two boiler exhaust gas paths (20, 21) from each other.

3. Gas turbine plant according to claim 1 or 2, **characterised in that** the boiler input side (10) has a common boiler input (27) from which a common boiler main path (43) departs which is divided into the two boiler exhaust gas paths (20, 21) at a boiler branch point (44).

4. Gas turbine plant according to claim 3, **characterised in that** a control element (45) is arranged at the boiler branch point (44) for controlling a division of the exhaust gas flow into the two boiler exhaust gas paths (20, 21).

5. Gas turbine plant according to claim 1 or 2, **characterised in that**
- the boiler input side (10) has a first boiler input (27) and a second boiler input (28),
- the first boiler exhaust gas path (20) leads from the first boiler input (27) to the first boiler output (13),
- the second boiler exhaust gas path (21) leads, separately from the first boiler exhaust gas path (20), from the second boiler input (28) to the second boiler output (14),
- arranged at the boiler input side (10) is a diffuser (23) which has a diffuser input (24) connected to the turbine outlet (12), a first diffuser output (24) connected to the first boiler input (27), and a second diffuser output (26) connected to the second boiler input (28),
- a common diffuser main path (29) departs from the diffuser input (24) and is divided at a diffuser branch point (32) into two separate diffuser exhaust gas paths (30, 31).

6. Gas turbine plant according to claim 5, **characterised in that** arranged in the diffuser (23) is a diffuser partition wall (33), the leading edge (34) of which forms a diffuser branch point (32) and which separates the two diffuser exhaust gas paths (30, 31) as far as the diffuser outputs (25, 26).

7. Gas turbine plant according to claims 2 and 6, **characterised in that** a trailing edge (35) of the diffuser partition wall (33) and a leading edge (36) of the boiler partition wall (22) abut each other.

8. Gas turbine plant according to claim 5 or 7, **characterised in that** a control element (37) is arranged at the diffuser branch point (32) for controlling a division of the exhaust gas flow into the two diffuser exhaust gas paths (30, 31).

9. Gas turbine plant according to any of claims 1 to 8, **characterised in that**
- the waste heat boiler arrangement (3) has a heat exchanger arrangement (48) for cooling the exhaust gases,
- the two boiler exhaust gas paths (20, 21) pass separately through the heat exchanger arrangement (48).

10. Gas turbine plant according to any of claims 1 to 9, **characterised in that** at least one exhaust gas treatment device (49, 50) is arranged in the waste heat boiler arrangement (3) but only in the first boiler exhaust gas path (20).

11. Gas turbine plant according to any of claims 1 to 10, **characterised in that** the waste heat boiler arrangement (3) has a common waste heat boiler (51) in which the two boiler exhaust gas paths (20, 21) are formed, and which comprises the respective boiler input (27, 28) and the respective boiler output (13, 14).

12. Gas turbine plant according to claim 11, **characterised in that** the waste heat boiler (51) has a common heat exchanger arrangement (48) through which both boiler exhaust gas paths (20, 21) pass.

13. Gas turbine plant according to any of claims 1 to 10, **characterised in that** the waste heat boiler arrangement (3) has a first waste heat boiler (52) in which the first boiler exhaust gas path (20) is formed, and a second waste heat boiler (53) in which the second boiler exhaust gas path (21) is formed.

14. Gas turbine plant according to claim 13, **characterised in that** a heat exchanger arrangement (48) has a first heat exchanger (54) arranged in the first waste heat boiler (54) and through which the first boiler exhaust gas path (20) passes, and a second heat exchanger (55) arranged in the second waste heat boiler (53) and through which the second boiler exhaust gas path (21) passes.

15. Gas turbine plant according to any of claims 1 to 14, **characterised in that**
- the first boiler output (13) is also connected to an exhaust gas aftertreatment plant (57),
- an exhaust gas control element (58) is provided for controlling a division of the exhaust gas flow from the first boiler exhaust gas path (20) to the exhaust gas aftertreatment plant (57) and to the flue (15).

## Revendications

1. Installation de turbine à gaz
- avec au moins un dispositif de turbine à gaz (2), qui comprend au moins un compresseur (5), au moins un brûleur (6, 7) et au moins une turbine à gaz (8, 9),
- avec au moins une disposition de chaudière de récupération (3), qui comprend un côté d'entrée de chaudière (10) relié avec une sortie de turbine (12) du dispositif à turbine à gaz (2), une première sortie de chaudière (13) reliée avec une cheminée (15) et une deuxième sortie de chaudière (14),
- avec un guidage de gaz d'échappement (4), qui relie la deuxième sortie de chaudière (14) avec une entrée de compresseur (18) du dispositif de turbine à gaz (2),
**caractérisée en ce que**
- la disposition de chaudière de récupération (3) comprend un premier chemin de gaz d'échappement de chaudière (20) qui est relié avec le côté d'entrée de chaudière (10) et qui conduit à la première sortie de chaudière (13),
- la disposition de chaudière de récupération (3) comprend un deuxième chemin de gaz d'échappement de chaudière (21) qui est relié avec le côté d'entrée de chaudière (10) et qui conduit séparément du premier chemin de gaz d'échappement de chaudière (20) vers la deuxième sortie de chaudière (14) et
- le guidage de gaz d'échappement (4) est séparé de manière fluidique de la cheminée (15) entre la deuxième sortie de chaudière (14) et l'entrée de compresseur (18).

2. Installation de turbine à gaz selon la revendication 1,
**caractérisée en ce que**
dans la disposition de chaudière de récupération (3) est disposée une cloison de chaudière (22) qui sépare entre eux les deux chemins de gaz d'échappement de chaudière (20, 21).

3. Installation de turbine à gaz selon la revendication 1 ou 2,
**caractérisée en ce que**
le côté d'entrée de chaudière (10) comprend une entrée de chaudière commune (27) d'où part un chemin principal de chaudière commun (43) qui est divisé, au niveau d'un endroit d'embranchement de chaudière (44), dans les deux chemins de gaz d'échappement de chaudière (20, 21).

4. Installation de turbine à gaz selon la revendication 3,
**caractérisée en ce que**
au niveau de l'endroit d'embranchement de chaudière (44) est disposé un organe de commande (45) pour la commande d'une division de l'écoulement des gaz d'échappement entre les deux chemins de gaz d'échappement de chaudière (20, 21).

5. Installation de turbine à gaz selon la revendication 1 ou 2,
**caractérisée en ce que**
- le côté d'entrée de chaudière (10) comprend une première entrée de chaudière (27) et une deuxième entrée de chaudière (28),
- le premier chemin de gaz d'échappement de chaudière (20) conduit de la première entrée de chaudière (27) vers la première sortie de chaudière (13),
- le deuxième chemin de gaz d'échappement de chaudière (21) conduit, séparément du premier chemin de gaz d'échappement de chaudière (20), de la deuxième entrée de chaudière (28) vers la deuxième sortie de chaudière (14),
- au niveau du côté d'entrée de chaudière (10), est disposé un diffuseur (23), qui comprend une entrée de diffuseur (24) reliée avec la sortie de turbine (12), une première sortie de diffuseur (25) reliée avec la première entrée de chaudière (27) et une deuxième sortie de diffuseur (26) reliée avec la deuxième entrée de chaudière (28),
- de l'entrée du diffuseur (24) sort un chemin principal de diffuseur commun (29), qui est divisé au niveau d'un endroit d'embranchement de diffuseur (32) en deux chemins de gaz d'échappement de diffuseur (30, 31) séparés entre eux.

6. Installation de turbine à gaz selon la revendication 5,
**caractérisée en ce que**
dans le diffuseur (23), est disposée une cloison de diffuseur (33), dont le bord de fuite (34) constitue l'endroit d'embranchement de diffuseur (32) et qui sépare les deux chemins de gaz d'échappement de diffuseur (30, 31) jusqu'aux sorties de diffuseur (25, 26).

7. Installation de turbine à gaz selon les revendications 2 et 6,
**caractérisée en ce que**
un bord de fuite (35) de la cloison de diffuseur (33) et un bord de fuite (36) de la cloison de chaudière (22) viennent en butée.

8. Installation de turbine à gaz selon la revendication 5 ou 7,
**caractérisée en ce que**
au niveau de l'endroit d'embranchement de diffuseur (32), est disposé un organe de commande (37) pour la commande d'une division de l'écoulement du gaz d'échappement entre les deux chemins de gaz d'échappement de diffuseur (30, 31).

9. Installation de turbine à gaz selon l'une des revendications 1 à 8,
**caractérisée en ce que**
- la disposition de chaudière de récupération (3) comprend une disposition d'échangeur thermique (48) pour le refroidissement du gaz d'échappement,
- les deux chemins de gaz d'échappement de chaudière (20, 21) traversent séparément la disposition d'échangeur thermique (48).

10. Installation de turbine à gaz selon l'une des revendications 1 à 9,
**caractérisée en ce que**
dans la disposition de chaudière de récupération (3), est disposé, uniquement dans le premier chemin de gaz d'échappement de chaudière (20), au moins un dispositif de traitement de gaz d'échappement (49, 50).

11. Installation de turbine à gaz selon l'une des revendications 1 à 10,
**caractérisée en ce que**
la disposition de chaudière de récupération (3) comprend une chaudière de récupération commune (51) dans laquelle les deux chemins de gaz d'échappement de chaudière (20, 21) sont prévus et qui comprend l'entrée de chaudière (27, 28) correspondante ainsi que la sortie de chaudière (13, 14) correspondante.

12. Installation de turbine à gaz selon la revendication 11,
**caractérisée en ce que**
la chaudière de récupération (51) comprend une disposition d'échangeur thermique commune (48) à travers laquelle sont guidés les deux chemins de gaz d'échappement de chaudière (20, 21).

13. Installation de turbine à gaz selon l'une des revendications 1 à 10,
**caractérisée en ce que**
la disposition de chaudière de récupération (3) comprend une première chaudière de récupération (52), dans laquelle est prévu un premier chemin de gaz d'échappement de chaudière (20), et une deuxième chaudière de récupération (53) dans laquelle le deuxième chemin de gaz d'échappement de chaudière (21) est prévu.

14. Installation de turbine à gaz selon la revendication 13,
**caractérisée en ce que**
une disposition d'échangeur thermique (48) comprend un premier échangeur thermique (54) disposé dans la première chaudière de récupération (52), à travers lequel le premier chemin de gaz d'échappement de chaudière (20) est guidé, ainsi qu'un deuxième échangeur thermique (55), disposé dans la deuxième chaudière de récupération (53), à travers lequel le deuxième chemin de gaz d'échappement de chaudière (21) est guidé.

15. Installation de turbine à gaz selon l'une des revendications 1 à 14,
**caractérisée en ce que**
- la première sortie de chaudière (13) est reliée en outre avec une installation de traitement de gaz d'échappement (57),
- un organe de commande de gaz d'échappement (58) est prévu pour la commande d'une division de l'écoulement du gaz d'échappement du premier chemin de gaz d'échappement de chaudière (20) entre l'installation de post-traitement de gaz d'échappement (57) et la cheminée (15).
